# EUROPÄISCHE PATENTANMELDUNG

(11) **EP 1 498 599 A1**
(43) Veröffentlichungstag der Anmeldung: **19.01.2005**
(21) Anmeldenummer: 04008650.6
(22) Anmeldetag: 08.04.2004
(51) Int. Cl.: F02F 11/00, G01L 23/10, G01L 23/22, G01L 23/06

(54) **Zylinderkopfdichtung**

(30) Priorität: 08.07.2003 DE 10330800
(71) Anmelder: ElringKlinger AG, 72581 Dettingen (DE); Kistler Holding AG, 8408 Winterthur (CH)
(72) Erfinder: Diez, Armin, 73252 Lenningen (DE); Cavalloni, Claudio Dr., 8105 Regensdorf (DE); Wolfer, Peter, 8451 Kleinandelfingen (DE); Schnepf, Michael, 8548 Ellikon an der Thur (DE); Eifler, Gerald Dr., 65232 Taunusstein (DE)
(74) Vertreter: Sparing - Röhl - Henseler Patentanwälte

(57) **Zusammenfassung**

Die Erfindung betrifft eine metallische Zylinderkopfdichtung für eine Brennkraftmaschine, die mit einer oder mehreren, nebeneinander angeordneten Öffnungen (3) entsprechend den Brennräumen der Brennkraftmaschine versehen ist und wenigstens eine Blechlage (1,1', 2) umfaßt, wobei benachbart zum Rand der wenigstens einen Öffnung (3) eine durch den Brennraumgasdruck beaufschlagbare Membran (16) angeordnet ist, deren Bewegung über einen in der Blechlage (2) angeordneten Drucksensor (9) aufnehmbar ist, wobei zwischen dem Außenrand der Blechlage (2) und dem Rand der Öffnung (3) des jeweiligen Brennraums eine brennraumseitig durch die Membran (16) verschlossene Bohrung (7) angebracht ist, wobei die Membran die Bohrung (7) brennraumseitig verschließt und der Drucksensor (9) axial bezüglich der Bohrung (7) von der Membran druckbeaufschlagbar ist.

## Beschreibung

Die Erfindung betrifft eine Zylinderkopfdichtung nach dem Oberbegriff des Anspruchs 1.

Aus GB 2 317 701 A ist es an sich bekannt, eine Dichtung zwischen einem Behälter und seinem abnehmbaren Deckel mit einem in der Dichtung integrierten Drucksensor zu versehen, der den auf die Dichtung ausgeübten Druck mißt und bei Unterschreiten eines Schwellenwertes anzeigt, daß möglicherweise eine Leckage aufgetreten ist. Dies dient aber zur Überwachung der Dichtung und nicht zur Überwachung eines Innendrucks.

Aus DE 40 14 502 C2 ist eine formgepreßte Zylinderkopfdichtung für eine Brennkraftmaschine bekannt, in die vor dem Pressen ein Sensor zum Erfassen von Meßwerten aus dem Bereich des Zylinderinnenraums in das Dichtungsmaterial eingebracht wird, wonach die Dichtung gepreßt wird, um eine gasdichte Verbindung zwischen Dichtungsmaterial und eingebettetem Sensor herzustellen. Bei dem Sensor handelt es sich um einen Temperatursensor oder einen Lichtleitstab, wobei letzterer die aktuellen Helligkeitswerte im Brennraum einer Brennkraftmaschine an eine elektrische Auswerteeinheit weiterleitet. Eine unmittelbare Messung des Zylinderinnendrucks ist hierbei nicht möglich oder vorgesehen.

Auch gemäß US 4 393 687 werden Lichtleiter verwendet, die in Nuten der Zylinderkopfdichtung angeordnet sind. Desgleichen wird entsprechend US 6 301 957 B1 ein Lichtleiter zur Bestimmung des Zylinderinnendrucks verwendet.

Ferner ist es aus WO 03/71119 bekannt, zur Zylinderinnendruckmessung in einer Ausnehmung einer Zylinderkopfdichtung ein Metallrohr einzubetten, das zylinderseitig eine Membran trägt, die sich unter Einwirkung des Zylinderinnendrucks bewegt, wobei diese Bewegungen Dichteänderungen in einem zwischen Membran und einen optischen Sensor angeordneten Medium wie Öl verursachen, die durch den optischen Sensor abgetastet und umgesetzt werden. Eine unmittelbare Messung des Zylinderinnendrucks ist auch hierbei nicht möglich oder vorgesehen.

Aus US 5 195 365 ist eine aus mehreren metallischen Lagen bestehende Zylinderkopfdichtung bekannt, bei der in einer mittleren Lage eine Membran parallel zur Dichtungsebene ausgebildet ist, wobei sich auf einer Seite der Membran eine zum Zylinder hin offene Ausnehmung befindet, so daß die Membran durch den Zylinderinnendruck beaufschlagt wird. Auf der anderen Seite befindet sich eine zum Zylinder hin geschlossene Ausnehmung zur Aufnahme eines Drucksensors, der die Bewegungen der Membran aufnimmt und in elektrische Impulse umwandelt, die entsprechenden elektrischen Leitungen einer Auswerteeinheit zugeführt werden. Abgesehen davon, daß die zum Zylinder hin offene, schlitzartige Ausnehmung verschmutzen bzw. zusetzen und damit zumindest zu Verfälschungen der Meßergebnisse führen kann, befindet sich der Drucksensor in einem relativ heißen Bereich benachbart zur Brennkammer und außerdem ist an der mittleren Dichtungslage eine Isolierschicht anzuordnen, durch die die Leitungen vom Drucksensor nach außen geführt werden. Jedoch können die Isolierschicht und damit die Leitungen durch aufliegende Sicken der äußeren Dichtungslagen beschädigt werden.

Schließlich ist es aus WO 03/071167 bekannt, bei einer mehrlagigen Zylinderkopfdichtung in der mittleren Lage pro Zylinder eine Ausnehmung benachbart zum Brennkammerrand vorzusehen, wobei ein als Membran dienender Wandabschnitt benachbart zum Brennkammerrand verbleibt, an dem ein Dehnungsmeßstreifen in Umfangsrichtung verlaufend befestigt ist. Dies erfordert nicht nur eine relativ große Öffnung, sondern auch aus Abdichtungsgründen die Begrenzung der Öffnung durch einen relativ dicken Wandabschnitt, wodurch die Empfindlichkeit der Messung beeinträchtigt wird.

Aufgabe der Erfindung ist es daher, eine Zylinderkopfdichtung nach dem Oberbegriff des Anspruchs 1 zu schaffen, die bei einfacher Konstruktion den Druck im Zylinder eines Verbrennungsmotors mit relativ geringen Fehlertoleranzen messen kann.

Diese Aufgabe wird entsprechend den Merkmalen des Anspruchs 1 gelöst.

Demgemäß ist eine metallische Zylinderkopfdichtung für eine Brennkraftmaschine vorgesehen, die mit einer oder mehreren, nebeneinander angeordneten Öffnungen entsprechend den Brennräumen der Brennkraftmaschine versehen ist und wenigstens eine Blechlage umfaßt, wobei benachbart zum Rand der wenigstens einen Öffnung eine durch den Brennraumgasdruck beaufschlagbare Membran angeordnet ist, deren Bewegung über einen in der Blechlage angeordneten Drucksensor aufnehmbar ist. Hierbei ist zwischen dem Außenrand der Blechlage und dem Rand der Öffnung des jeweiligen Brennraums eine brennraumseitig durch die Membran verschlossene Bohrung angebracht, wobei die Membran die Bohrung brennraumseitig verschließt und der Drucksensor axial bezüglich der Bohrung von der Membran druckbeaufschlagbar ist. Bei einer derartigen Konstruktion kann der Druck direkt gemessen werden, ohne daß verschmutzende und damit die Messung beeinträchtigende Hohlräume vorzusehen sind. Die Konstruktion ist zumindest insofern einfach, als die Zuleitungen zum Drucksensor in der Bohrung ohne die Gefahr einer Beschädigung untergebracht werden können, und daß ein einfacher axialer Aufbau in der Bohrung ermöglicht wird, der es erlaubt, den Drucksensor in einem relativ kühlen Bereich der Zylinderkopfdichtung unterzubringen.

Hiermit sind Druckmessungen möglich, die eine Standardabweichung von etwa ± 1 bar aufweisen und damit der Druckmessung mit einem üblichen Glühstift-Quarzdruckaufnehmer ebenbürtig sind. Die Temperaturbeeinflussung des Drucksensors kann sehr klein gehalten und gegebenenfalls durch einen additiven Term ohne weiteres korrigiert werden.

Dies ermöglicht insbesondere bei Dieselmotoren mit Common-Rail- oder Pumpe/Düse-Einspritzung eine sehr genaue Brennverfahrenssteuerung. Abweichungen in der Vollast-Einspritzmenge einzelner Zylinder, verursacht durch toleranzbehaftete Bauteile in den Einspritzelementen, können durch die Motorelektronik aufgrund der Meßwerte der Drucksensoren ausgeglichen werden. Der "Sicherheitsabstand" des Vollast-Spitzendrucks von der mechanischen Belastungsgrenze der Motorstruktur läßt sich deutlich reduzieren. Anhand des Druckverlaufs kann die zylinderindividuelle Überwachung der Verbrennung erfolgen. Motorverschleiß oder Fehlfunktionen der Einspritzung, Abgasrückführung oder Ladedruckregelung können sofort aufgrund untypischer Spitzendrücke erkannt werden.

Weitere Ausgestaltungen der Erfindung sind der nachfolgenden Beschreibung und den Unteransprüchen zu entnehmen.

Die Erfindung wird nachstehend anhand eines in den beigefügten Abbildungen dargestellten Ausführungsbeispiels näher erläutert.
Fig. 1 zeigt ausschnittweise eine Draufsicht auf eine metallische Zylinderkopfdichtung.
Fig. 2 zeigt einen Schnitt längs der Linie C-C von Fig. 1

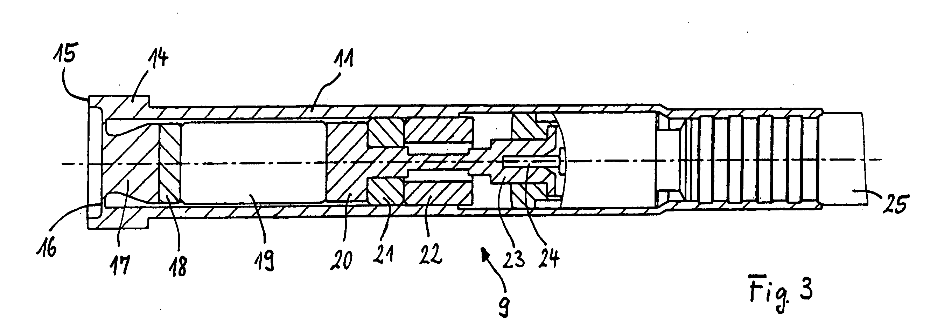

Fig. 3 zeigt im Schnitt Einzelheiten des Aufbau eines Drucksensors für die Zylinderkopfdichtung.

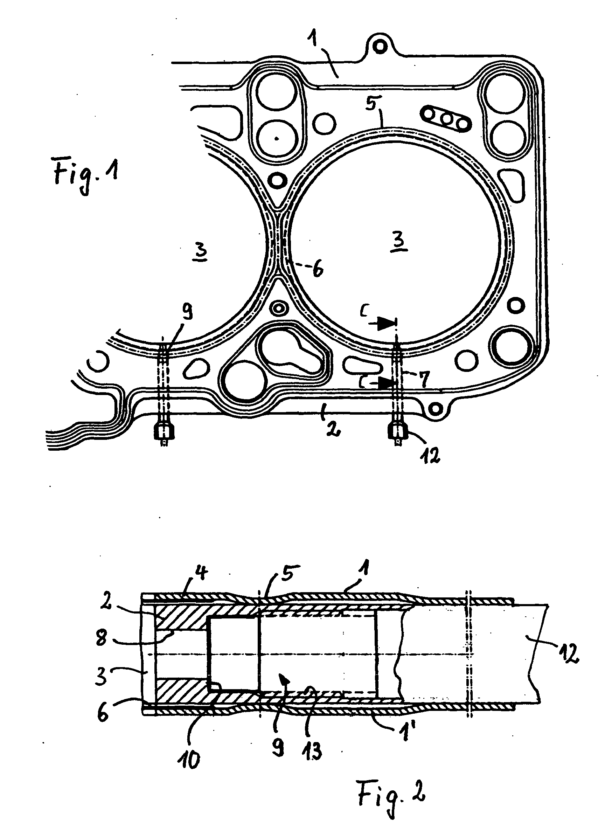

Die in Fig. 1 dargestellte metallische Zylinderkopfdichtung ist dreilagig, umfaßt zwei Deckbleche 1, 1' und ein Trägerblech 2 und ist mit einer oder mehreren, nebeneinander angeordneten Öffnungen 3 entsprechend den Brennräumen einer Brennkraftmaschine versehen. Die Deckbleche 1, 1' sind um jede Öffnung 3 herum mit Abstand zu dieser unter Belassung eines geraden Blechabschnitts 4 im Öffnungsrandbereich mit einer Sicke 5 versehen, wobei die Sicken 5 mit ihren Scheiteln gegeneinander gerichtet sind und zwischen sich das Trägerblech 2 einschließen.

Benachbart zu der jeweiligen Sicke 5 befindet sich am geraden Blechabschnitt 4 um jede Öffnung 3 herum, d.h. radial einwärts von der jeweiligen Sicke 5, auf der Seite, auf der sich der Scheitel der Sicke 5 befindet, eine als Federwegbegrenzer für die Sicke 5 dienende Brennraumüberhöhung 6. Letztere sind an den Deckblechen 1, 1' befestigt, insbesondere angeschweißt, sie können aber auch einstückig mit den Deckblechen 1, 1' ausgebildet sein.

Die Zylinderkopfdichtung ist insbesondere um ihre Mittelebene spiegelsymmetrisch ausgebildet, so daß nach dem Einspannen der Zylinderkopfdichtung zwischen Zylinderkopf und -block einer Brennkraftmaschine von beiden Seiten das Trägerblech 2 der gleichen Krafteinwirkung unterliegt.

Die beiden Deckbleche 1, 1' können beidseitig mit einer (nicht dargestellten) Mikroabdichtungsschicht beschichtet sein. Jedenfalls ist aber an beiden Außenseiten der Dichtung und zwischen jeweils zwei Lagen eine Mikroabdichtungsschicht vorzusehen, d.h. es können auch die beiden Deckbleche 1, 1' nur außenseitig und das Trägerblech 2 beidseitig mit der Mikroabdichtungsschicht versehen sein.

Im Trägerblech 2 ist zwischen seinem Außenrand und dem Öffnungsrand des jeweiligen Brennraums eine Bohrung 7 angebracht, die im Bereich 8 benachbart zu den Brennraumüberhöhungen 6 einen verminderten Durchmesser aufweist, wobei ein vorzugsweise piezoelektrischer, gegebenenfalls aber auch ein resistiver (DMS), piezoresistiver, kapazitiver, induktiver oder optischer Drucksensor 9 an die durch den Bereich 8 mit vermindertem Durchmesser gebildete Schulter 10 angrenzend eingesetzt ist.

Der Drucksensor 9 umfaßt ein metallisches Gehäuse 11, das gemäß Fig. 1, 2 von einer nach außen ragenden und damit von außen betätigbaren Hohlschraube 12 aufgenommen sein kann, die selbst mit einem Innengewindeabschnitt 13 der Bohrung 7 benachbart zu der Schulter 10 verschraubt ist. Gegebenenfalls könnten Gehäuse 11 und Hohlschraube 12 aber auch einstückig miteinander ausgebildet sein, d.h. das Gehäuse 11 mit einem entsprechenden Gewindeabschnitt versehen und mit dem Innengewindeabschnitt 13 verschraubt sein.

Brennraumseitig ist ein Kopf 14, dessen Stirnseite einen Ring 15 aufweist. Der Bereich innerhalb des Rings 15 ist gegebenenfalls etwas zurückversetzt und bildet eine Membran 16 mit einem damit ausgebildeten Druckstempel 17. Der Druckstempel 17 wirkt über eine elektrisch leitende Kompensationsscheibe 18 auf einen piezoelektrischen Kristall 19 des Drucksensors 9, der beabstandet zur Innenseite des Gehäuses 11 angeordnet ist, ein. Der Kopf 14 kann einstückig mit dem Gehäuse 11 oder separat hiervon ausgebildet sein, wobei er in letzterem Falle als separates Teil in die Bohrung 7 eingeschweißt oder eingepreßt sein kann, so daß er die Bohrung 7 brennraumseitig verschließt. Wenn der Kopf einstückig mit dem Gehäuse 11 ausgebildet ist, wird er - beispielsweise über die Hohlschraube 12 - abdichtend gegen die Schulter 10 gespannt.

Auf der dem Kopf 14 abgewandten Seite sind eine Ladungsabnahmeanordnung 20 (elektrischer Gegenpol ist die geerdete Zylinderkopfdichtung) und ein Stützring 21 sowie ein Einpreßring 22 vorgesehen, um den Kristall - über die Kompensationsscheibe 18 - in Kontakt mit dem Druckstempel 17 der Membran 16 zu halten. Die Ladungsabnahmeanordnung 20 ist durch den Stützring 21 und den Einpreßring 22 hindurchgeführt und über einen angeformten Kontaktschuh 23 mit einem Kontakt 24 eines Kabel 25 verbunden, daß dicht in das Gehäuse 11 eingesetzt ist.

Der sich im Brennraum während der Verbrennung aufbauende Druck wirkt über die Membran 16 des Kopfes 14 auf die Stimfläche des Drucksensors 9 sowie letztlich auf dessen Kristall 19 ein, dessen Ladungszustand den Druck im Brennraum wiedergibt. Dadurch, daß der Kopf 14 die Bohrung 7 verschließt, findet keine unerwünschte Leckage statt. Die Länge des Druckstempels 17 und/oder der Kompensationsscheibe 18 können genügend groß gewählt werden, daß eine Beeinträchtigung des Drucksensors 9 durch entsprechend hohe Temperaturen im Bereich des Brennraums vermieden werden können.

Dadurch, daß bei der dargestellten Ausführungsform das Trägerblech 2 spiegelsymmetrisch zwischen den Deckblechen 1, 1' und den Brennraumüberhöhungen 6 angebracht ist, wird insoweit vermieden, daß Spannungen auf den Drucksensor 9 übertragen werden, die sein Meßergebnis verfälschen könnten.

Andererseits kann die Zylinderkopfdichtung aber auch einlagig, zweilagig (etwa aus den Lagen 1, 2 bestehend) oder mehr als dreilagig je nach Anforderung ausgebildet sein.

Die in den einzelnen Brennräumen gemessenen Drücke können zum Regeln der. Einspritzung und Zündzeitpunkte verwendet werden, um die Brennstoffeinspritzung bzw. die Verbrennung Brennraum-individuell zu optimieren.

## Patentansprüche

1. Metallische Zylinderkopfdichtung für eine Brennkraftmaschine, die mit einer oder mehreren, nebeneinander angeordneten Öffnungen (3) entsprechend den Brennräumen der Brennkraftmaschine versehen ist und wenigstens eine Blechlage (1, 1', 2) umfaßt, wobei benachbart zum Rand der wenigstens einen Öffnung (3) eine durch den Brennraumgasdruck beaufschlagbare Membran (16) angeordnet ist, deren Bewegung über einen in der Blechlage (2) angeordneten Drucksensor (9) aufnehmbar ist, **dadurch gekennzeichnet, daß** zwischen dem Außenrand der Blechlage (2) und dem Rand der Öffnung (3) des jeweiligen Brennraums eine brennraumseitig durch die Membran (16) verschlossene Bohrung (7) angebracht ist, wobei die Membran die Bohrung (7) brennraumseitig gasdicht verschließt und der Drucksensor (9) axial bezüglich der Bohrung (7) von der Membran druckbeaufschlagbar ist.

2. Zylinderkopfdichtung nach Anspruch 1, **dadurch gekennzeichnet, daß** die Membran (16) einen Druckstempel (17) trägt.

3. Zylinderkopfdichtung nach Anspruch 1 oder 2, **dadurch gekennzeichnet, daß** die Membran an einem Kopf (14) angeordnet ist.

4. Zylinderkopfdichtung nach Anspruch 3, **dadurch gekennzeichnet, daß** der Kopf (14) in die Bohrung (7) eingesetzt und verschweißt oder eingepreßt ist.

5. Zylinderkopfdichtung nach Anspruch 3, **dadurch gekennzeichnet, daß** der Kopf (14) gegen eine Schulter (10) der Bohrung (7) gasdicht gespannt ist.

6. Zylinderkopfdichtung nach Anspruch 5, **dadurch gekennzeichnet, daß** der Kopf (14) Teil eines in der Bohrung (7) angeordneten Gehäuses (11) ist.

7. Zylinderkopfdichtung nach Anspruch 5, **dadurch gekennzeichnet, daß** der Kopf (14) in ein in der Bohrung (7) angeordnetes Gehäuse (11) eingesetzt ist.

8. Zylinderkopfdichtung nach Anspruch 6 oder 7, **dadurch gekennzeichnet, daß** der Drucksensor (9) von dem Gehäuse (11) aufgenommen ist, das in der Bohrung (7) nach außen abgedichtet angeordnet ist.

9. Zylinderkopfdichtung nach einem der Ansprüche 6 bis 8, **dadurch gekennzeichnet, daß** die Bohrung (7) benachbart zur Öffnung (3) eine Schulter (10) aufweist, gegen die das Gehäuse (11) dichtend gespannt ist.

10. Zylinderkopfdichtung nach einem der Ansprüche 6 bis 9, **dadurch gekennzeichnet, daß** das Gehäuse (11) von einer von außen betätigbaren Hohlschraube (12) aufgenommen ist, die in die Bohrung (7) eingeschraubt ist.

11. Zylinderkopfdichtung nach einem der Ansprüche 1 bis 10, **dadurch gekennzeichnet, daß** die Membran (16) über eine Kompensationsscheibe (18) auf den Drucksensor (9) einwirkt.

12. Zylinderkopfdichtung nach einem der Ansprüche 1 bis 11, **dadurch gekennzeichnet, daß** wenigstens ein Deckblech (1, 1') vorgesehen ist, das um jede Öffnung (3) herum mit Abstand zu dieser eine Sicke (5) aufweist.

13. Zylinderkopfdichtung nach Anspruch 12, **dadurch gekennzeichnet, daß** zwei Deckbleche (1, 1') vorgesehen sind, wobei sich zwischen den beiden Deckblechen (1, 1') ein Trägerblech (2) befindet, zwischen dessen Außenrand und dem Rand der Öffnung (3) des jeweiligen Brennraums die Bohrung (7) angebracht ist, die den Drucksensor (9) aufnimmt.

14. Zylinderkopfdichtung nach Anspruch 12 oder 13, **dadurch gekennzeichnet, daß** um jede Öffnung (3) herum radial einwärts von der jeweiligen Sicke (5) auf der Seite, auf der sich ihr Scheitel befindet, eine als Federwegbegrenzer für die Sicke (5) dienende Brennraumüberhöhung (6) angeordnet ist.

15. Zylinderkopfdichtung nach Anspruch 14, **dadurch gekennzeichnet, daß** die Brennraumüberhöhungen (6) an den Deckblechen (1, 1') angebracht sind.

16. Zylinderkopfdichtung nach einem der Ansprüche 1 bis 15, **dadurch gekennzeichnet, daß** die Drucksensoren (9) mit einer Steuerung für die Einspritzund/oder Auslaßventile der Brennkraftmaschine verbindbar sind.

17. Zylinderkopfdichtung nach einem der Ansprüche 1 bis 16, **dadurch gekennzeichnet, daß** der Drucksensor (9) ein piezoelektrischer Sensor ist.

18. Zylinderkopfdichtung nach einem der Ansprüche 1 bis 16, **dadurch gekennzeichnet, daß** der Drucksensor (9) ein resistiver, piezoresistiver, kapazitiver, induktiver oder optischer Sensor ist.
